# DEMANDE DE BREVET EUROPEEN

(11) **EP 0 526 309 A1**
(43) Date de publication de la demande: **03.02.1993**
(21) Numéro de dépôt: 92402118.1
(22) Date de dépôt: 22.07.1992
(51) Int. Cl.: F02M 55/02

(54) **Moteur à combustion interne à injection**

(30) Priorité: 02.08.1991 FR 9109896
(71) Demandeur: AUTOMOBILES PEUGEOT, F-75116 Paris (FR); AUTOMOBILES CITROEN, F-92200 Neuilly sur Seine (FR)
(72) Inventeur: Chapelle, Christian, F-95150 Taverny (FR)
(74) Mandataire: Kohn, Philippe

(57) **Abrégé**

L'invention propose un moteur à combustion interne à alimentation par injection du type comportant, pour chaque cylindre (12) un injecteur de carburant (18) dont une extrémité (40) est reliée au circuit d'alimentation en carburant (42) par l'intermédiaire d'au moins une canalisation extérieure au bloc-cylindre et à la culasse (10) du moteur, caractérisé en ce qu'un tronçon (46) de la canalisation d'alimentation traverse une portion (22) de la culasse, l'injecteur étant agencé à l'extérieur (38) de la culasse et le tronçon de canalisation (46) traversant une portion (22) de la culasse adjacente à l'extrémité (40) de l'injecteur.

## Description

La présente invention concerne un moteur à combustion interne du type à alimentation par injection.

Elle concerne notamment un moteur Diesel à injection directe.

Ce type de moteur comporte pour chaque cylindre un injecteur de carburant dont une extrémité est reliée au circuit d'alimentation en carburant sous pression par l'intermédiaire d'au moins une canalisation extérieure au bloc cylindre qui s'étend à l'extérieur du bloc cylindre et agencée à l'extérieur d'une portion adjacente de la culasse.

On connaît, par exemple du document US-A-3.489.435 un tel agencement dans lequel les longueurs importantes des conduits d'alimentation des injecteurs nuisent au bon comportement hydraulique de l'injection car le parcours est ainsi particulièrement long, notamment lorsque la canalisation doit passer au-dessus du collecteur d'admission et de la partie supérieure de la culasse qui porte l'un des arbres à came et au-dessus de son couvre-culasse associé.

La présente invention a pour but de proposer une conception de moteur qui permet de réduire la longueur des canalisations d'alimentation des injecteurs.

Dans ce but, l'invention propose un moteur du type mentionné précédemment, caractérisé en ce qu'un tronçon de la canalisation d'alimentation traverse les deux portions opposées de la portion de la culasse perpendiculairement à l'axe de rotation de l'arbre à cames.

Selon d'autres caractéristiques de l'invention :
- le tronçon de canalisation traverse au moins une paroi de la portion de culasse avec interposition d'un joint d'étanchéité et d'une bague d'amortissement des vibrations ;
- le moteur comporte au moins deux cylindres parallèles et le tronçon de canalisation s'étend selon une direction sensiblement perpendiculaire au plan qui contient les axes des cylindres et il traverse une portion de la culasse située sensiblement à mi-distance des deux axes des cylindres ;
- chaque cylindre comporte plusieurs soupapes réparties autour de l'axe du cylindre et un injecteur central, le tronçon de la canalisation d'alimentation étant relié à l'extrémité de l'injecteur par une portion terminale de canalisation qui s'étend sensiblement dans ce plan entre les parties supérieures des soupapes environnantes.

D'autres caractéristiques et avantages de l'invention apparaîtront à la lecture de la description qui va suivre pour la compréhension de laquelle on se reportera aux dessins annexés dans lesquels :
- La figure 1 est une vue schématique de dessus illustrant la partie supérieure d'un moteur réalisé conformément aux enseignements de l'invention ;
- la figure 2 est une vue partielle en section selon la ligne 2-2 de la figure 1 ; et
- la figure 3 est une vue partielle en section selon la ligne 3-3 de la figure 1.

On reconnaît sur les figures la culasse 10 d'un moteur Diesel à injection directe.

Dans le mode de réalisation illustré aux figures, chaque cylindre 12 comporte quatre soupapes 14 dont les axes 16 sont parallèles à l'axe X-X du cylindre 12 et sont répartis régulièrement autour de cet axe.

Chaque cylindre est équipé d'un injecteur de carburant en position centrale.

L'axe du corps de chaque injecteur 18 est donc sensiblement confondu avec l'axe X-X du cylindre associé.

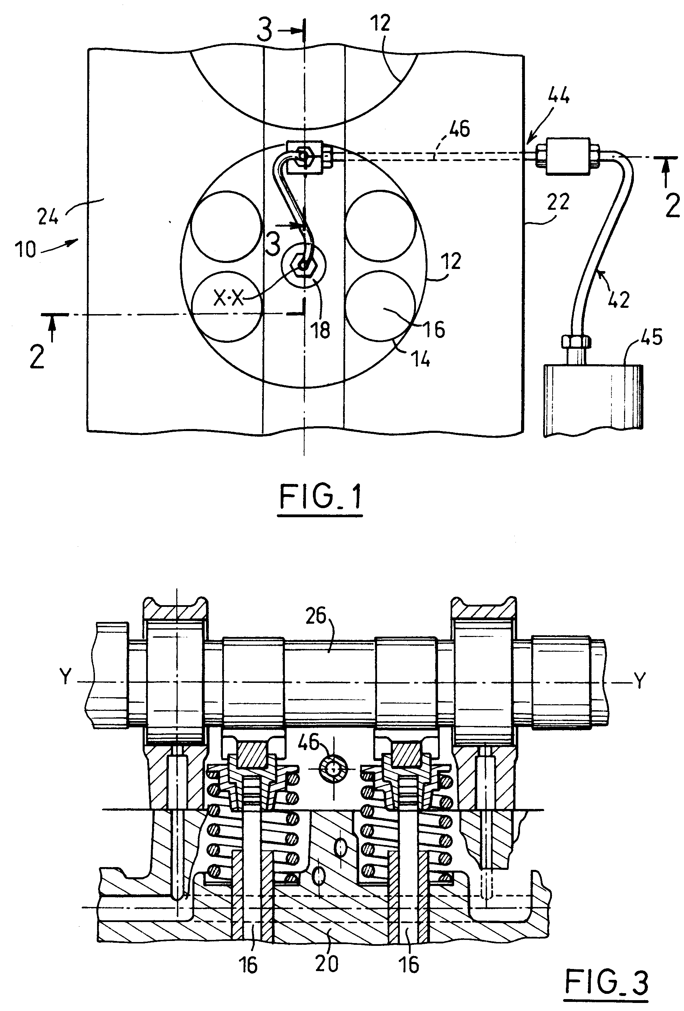

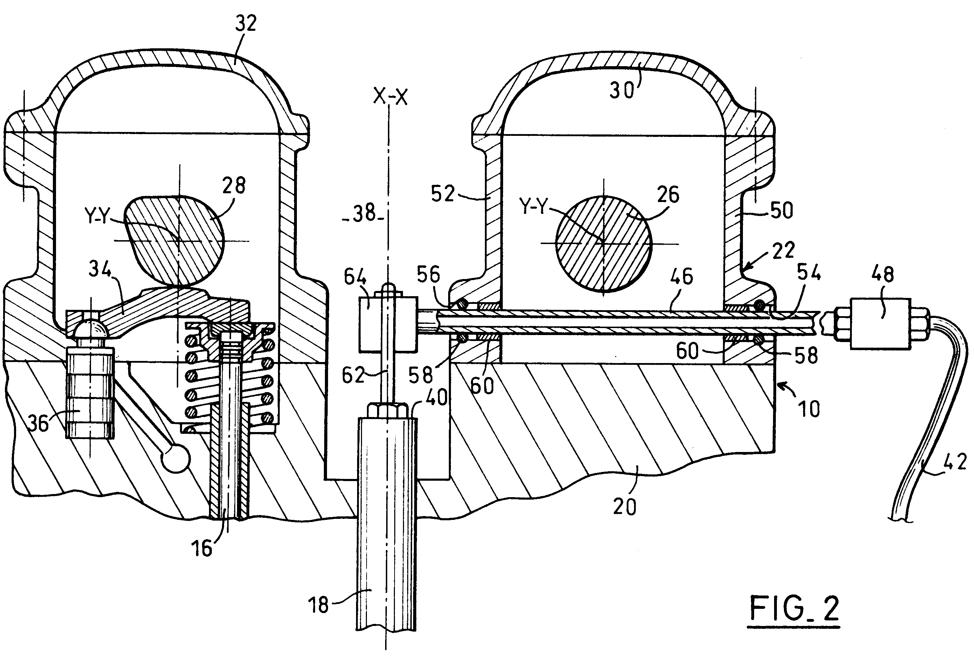

Comme on peut le constater aux figures 1 et 2, la culasse est ici réalisée en un bloc principal de culasse 20 sur lequel sont rapportées deux portions supérieures indépendantes 22 et 24.

Les deux portions 22 et 24 reçoivent chacune un arbre à cames 26 et 28 respectivement dont les axes de rotation Y-Y sont parallèles entre eux et perpendiculaires à l'axe X-X du cylindre associé.

Chaque portion supérieure 22, 24 de la culasse est équipée d'un couvre-culasse 30, 32.

Selon une technique connue, chaque arbre à cames assure la commande des soupapes 16, par exemple par l'intermédiaire de linguets 34 et de poussoirs hydrauliques de rattrapage de jeu 36.

Les deux portions supérieures 22 et 24 de la culasse 10 délimitent entre elles un passage central 38 dans lequel est située l'extrémité supérieure 40 de l'injecteur 18.

L'injecteur 18 est relié à un circuit d'alimentation en carburant sous pression 42 par l'intermédiaire d'une canalisation 44.

Comme cela est illustré schématiquement sur les figures, le circuit 42 comprend notamment une pompe à injection 45 qui est généralement montée et entraînée en rotation sur un axe parallèle à l'axe du vilebrequin du moteur et qui est fixée sur le bloc cylindre.

Afin de réduire la longueur de la canalisation 44, et conformément aux enseignements de l'invention, un tronçon sensiblement rectiligne 46 de la canalisation 44 traverse de part en part la portion supérieure 22 de la culasse du moteur.

A cet effet, le tronçon rectiligne 46 est relié au circuit 42 par un raccord de type connu 48 et il traverse les cloisons opposées 50 et 52 de la portion supérieure 22 de la culasse à travers des trous 54 et 56 formés respectivement dans les cloisons 50 et 52.

Afin d'assurer l'étanchéité de la traversée, chacun des trous 54 et 56 est équipé d'un joint torique d'étanchéité 58 ainsi que d'une bague 60 dont la fonction est d'amortir les vibrations entre le tronçon de canalisation 46 et les cloisons 50 et 52.

Le tronçon de canalisation 46 s'étend selon une direction sensiblement perpendiculaire à l'axe Y-Y de l'arbre à cames 26 et au plan qui contient les axes parallèles de deux cylindres consécutifs 12.

Comme on peut le voir aux figures 1 et 3, le tronçon 46 s'étend sensiblement à mi-distance des axes des deux cylindres consécutifs, c'est-à-dire dans une zone dégagée de passage entre les parties supérieures des soupapes environnantes et notamment entre les ressorts de ces soupapes 16.

Après avoir traversé la cloison 52, l'extrémité du tronçon de canalisation 46 qui débouche dans le passage central 38 est relié à l'extrémité supérieure 40 de l'injecteur 18 par une portion terminale 62 de la canalisation d'alimentation en carburant qui s'étend sensiblement dans le plan contenant les axes des cylindres et selon une direction parallèle aux axes Y-Y des arbres à cames.

La portion 62 est reliée au tronçon 46 par un raccord 64 du type à 90° d'une structure connue.

L'invention n'est pas limitée au mode de réalisation qui vient d'être décrit ni à l'application au moteur Diesel.

Il est notamment possible de traverser l'une ou l'autre des portions supérieures 22 ou 24 de la culasse dans le cas où cette dernière comporte deux parties supérieures.

L'invention trouve également à s'appliquer dans le cas où la partie supérieure de la culasse est réalisée sous la forme d'un seul élément qui enferme l'extrémité supérieure 40 de l'injecteur, le tronçon de canalisation 46 ne traversant alors qu'une seule paroi de la portion supérieure de la culasse 10.

## Revendications

1. Moteur à combustion interne à alimentation par injection du type comportant, pour chaque cylindre (12) un injecteur de carburant (18) dont une extrémité (40) est reliée au circuit d'alimentation en carburant (42) par l'intermédiaire d'au moins une canalisation extérieure au bloc cylindre et agencée à l'extérieur (38) d'une portion adjacente (22) de culasse recevant un arbre à cames (26), caractérisé en ce qu'un tronçon (46) de la canalisation d'alimentation traverse les deux parois opposées (50, 52) de la portion (22) de la culasse perpendiculairement à l'axe de rotation (Y-Y) de l'arbre à cames (26).

2. Moteur selon l'une quelconque des revendications 1 à 3, caractérisé en ce que le tronçon de canalisation (46) traverse au moins une paroi (50, 52) de la portion de culasse (22) avec interposition d'un joint d'étanchéité (58) et d'une bague (60) d'amortissement des vibrations.

3. Moteur selon l'une des revendications 1 ou 2, du type comportant au moins deux cylindres parallèles (12), caractérisé en ce que le tronçon (46) s'étend selon une direction sensiblement perpendiculaire au plan qui contient les axes (X-X) des cylindres et traverse une portion de la culasse située sensiblement à mi-distance des deux axes.

4. Moteur selon l'une quelconque des revendications précédentes, caractérisé en ce que chaque cylindre (12) comporte plusieurs soupapes (16) réparties autour de l'axe (X-X) du cylindre et un injecteur central (18).

5. Moteur selon la revendication 4, prise en combinaison avec la revendication 3, caractérisé en ce que le tronçon (46) est relié à l'extrémité (40) de l'injecteur par une portion terminale (62) de la canalisation qui s'étend sensiblement dans ledit plan entre les parties supérieures des soupapes environnantes.
